# EUROPÄISCHE PATENTSCHRIFT

(11) **EP 4 049 255 B1**
(45) Veröffentlichungstag und Bekanntmachung des Hinweises auf die Patenterteilung: **05.07.2023**
(21) Anmeldenummer: 20793339.1
(22) Anmeldetag: 16.10.2020
(51) Int. Cl.: G08B 17/06

(54) **PARKRAUMBEWIRTSCHAFTUNGSSYSTEM SOWIE AUSWERTEEINHEIT FÜR EIN PARKRAUMBEWIRTSCHAFTUNGSSYSTEM**
PARK SPACE MANAGEMENT SYSTEM AND EVALUATION UNIT FOR A PARK SPACE MANAGEMENT SYSTEM
SYSTÈME DE GESTION DE PARKING ET UNITÉ D'ÉVALUATION POUR UN SYSTÈME DE GESTION DE L'ESPACE DE PARKING

(30) Priorität: 25.10.2019 DE 102019128864
(43) Veröffentlichungstag der Anmeldung: 31.08.2022
(73) Patentinhaber: FOGTEC Brandschutz GmbH, 51063 Köln (DE)
(72) Erfinder: SPRAKEL, Dirk K., 50968 Köln (DE)
(74) Vertreter: Cohausz & Florack
(86) Internationale Anmeldenummer: PCT/EP2020/079165
(87) Internationale Veröffentlichungsnummer: WO 2021/078639

(56) Entgegenhaltungen:
- EP-A1- 2 500 888
- DE-A1-102018 201 517
- JP-A- 2016 103 926

## Beschreibung

Der Gegenstand betrifft ein Parkraumbewirtschaftungssystem sowie eine Auswerteeinheit für ein Parkraumbewirtschaftungssystem.

Brandbekämpfungssysteme für Parkraumbewirtschaftungssysteme sind hinlänglich bekannt und oft gesetzlich gefordert. Insbesondere Parkhäuser oder Tiefgaragen sind aufgrund ihrer baulich bedingten Dichte und Nähe der Fahrzeuge zueinander und der damit verbundenen hohen Brandlasten erheblichen Brandrisiken ausgesetzt. Bisher war bei einem Brand in einem Parkraum stets davon auszugehen, dass dabei die fossilen Brennstoffe der Fahrzeugantriebe brennen. Dies war insofern "günstig", als dass die Feuerwehr stets wusste, welche Materialien in Brand waren und eine darauf abgestimmte Brandbekämpfung einleiten konnte.

Durch die Diversifizierung der verschiedenen Antriebstypen, bedingt durch die Energiewende, ist bei einem Brand in einem Parkhaus oder einer Tiefgarage heute nicht mehr vor der Brandbekämpfung klar, welche Ursache der Brand hat und was für eine Brandlast vorliegt. Sogenannte neue Energieträger (new energy carriers (NEC)) sind Fahrzeuge mit gegenüber Verbrennungsmotoren alternativen Antrieben. Dies beginnt bei Gasfahrzeugen, geht über hybridelektrische Fahrzeuge und plug-in hybridelektrische Fahrzeuge hin zu rein elektrischen Fahrzeugen und auch mit Brennstoffzellen (ggf. unter Verwendung von Wasserstoff) betriebene Fahrzeuge. Gerade bei auf Batterien basierenden Fahrzeugen mit Hybridantrieb (hybrid electric vehicle (HEV)), plug-in Hybridantrieben (plug in electric vehicle (PEV)) und reinen Batterieantrieben (battery electric vehicle (BEV)) ist stets eine Batterie zur Energiespeicherung vorgesehen. Bisher bekannte Batterien für den Automobilbau sind Lithium-Ionen-Batterien, die ein erhebliches Brandrisiko darstellen und im Falle eines Brandes nur schwer und nur mit geeigneten Maßnahmen zu löschen sind. Diese neuen Fahrzeuge stellen die Brandbekämpfung vor bisher unbekannte Probleme. So kann sich bei mit Gas oder Wasserstoff angetriebenen KFZ die durch die Brandlast entstehende Hitze unter der Decke des Parkhauses sammeln oder in andere Richtungen ausströmen. Daher sind auch solche Brände nur schwer beherrschbar. Bei einer Annäherung kann Explosionsgefahr bestehen. Jedenfalls ist evtl. eine komplett andere Angriffsstrategie für die Feuerwehr und ggf. eine ortsfest Brandbekämpfungsanlage (BBA) geboten als dies bei "herkömmlichen" Antrieben.

Eine Überwachung der Temperatur eines elektrisch betriebenen Fahrzeugs zur Vermeidung gefährlicher Überhitzungen ist als Sicherheitsmaßnahme zumindest aus der JP2016103926A bekannt. Hierbei wird ein Temperatursensor einer bodenseitigen kontaktlosen Ladestation genutzt, um die Ladeleistung so zu wählen, dass es nicht zu einer Überhitzung kommt. Das Problem eines Brandes durch Überhitzung wird allerdings nicht betrachtet.

Eine Überwachung eines Parkbereichs unter anderem mittels Wärmebildkameras ist in der EP2500888A1 vorgeschlagen. Diese Kameras ermöglichen die Detektion der Überhitzung eines elektrischen Fahrzeugs während dessen Aufladung. Anleitung zur besseren Handhabung oder Vorbereitung einer Brandsituation nennt sie jedoch nicht.

Die DE102018201517A1 schlägt eine fahrzeuginterne Temperaturüberwachung vor.

Dem Gegenstand lag daher die Aufgabe zugrunde, die Brandbekämpfung in Parkraumbewirtschaftungssystem zu optimieren.

Diese Aufgabe wird durch ein Parkraumbewirtschaftungssystem nach Anspruch 1 sowie eine Auswerteeinheit nach Anspruch 10 gelöst.

Gegenständlich ist erkannt worden, dass abhängig vom Antriebstyp das Temperaturverhalten eines Fahrzeugs verschieden ist. Sowohl beim Einfahren und Abstellen des Fahrzeugs, also dem Abkühlungsprozess nach einer Fahrt als auch beim Entstehen eines Brandes, also dem initialen Aufheizungsprozess bis hin zu einem Brand, ist das Temperaturverhalten stark abhängig vom Antriebstyp.

Ein Antriebstyp kann im weitesten Sinne sowohl den Antriebsstrang als auch die Speichertechnologie zur Speicherung der Antriebsenergie betreffen. Ein Antriebsstrang kann auf einem Verbrennungsmotor oder einem Elektromotor basieren. Eine Speichertechnologie kann ein Flüssigkraftstofftank, ein Gastank oder eine Batterie betreffen. Eine Batterie kann unterschiedliche Technologien umfassen, wie z.B. Li-Ionen Batterien, Bleisäurebatterien, Lithium Polymer Batterien etc. Der Einfachheit halber wird nachfolgend lediglich von Antriebstyp gesprochen.

Darüber hinaus ist auch die Position von sogenannten Hotspots, also Bereichen in denen sich das Fahrzeug besonders aufheizt, im Bereich des Unterbodens von Fahrzeugen mit unterschiedlichen Antriebstypen höchst unterschiedlich. Diesen Umstand macht sich der Gegenstand zunutze, indem ein am Boden eines Parkplatzes anbringbarer Temperatursensor vorgesehen ist. Über den Temperatursensor, der bevorzugt nicht nur punktuell sondern insbesondere entlang einer Linie und/oder flächig ein Temperaturprofil erfassen kann, kann die Temperatur am Unterboden eines Fahrzeugs im Verlauf der Parkzeit erfasst werden.

Der Temperatursensor ist mit einer Auswerteeinheit verbunden. Die Verbindung kann drahtgebunden oder drahtlos sein.

Zur Bestimmung der Brandlast, um die Feuerwehr vor oder beim Eintreffen am Brandherd über mögliche Gefahren und Brandbekämpfungsstrategien zu informieren, wird vorgeschlagen, dass die Auswerteeinheit mit Hilfe des Temperatursensors zumindest einen Temperaturverlauf im Bereich des Temperatursensors auswertet und abhängig von dem Temperaturverlauf ein Signal ausgibt. Das Signal ist insbesondere ein Brandmeldesignal oder ein Brandvoralarm.

Ein Temperaturverlauf kann sowohl zeitlich als auch räumlich sein. Ein zeitlicher Temperaturverlauf kann die Temperatur über die Zeit darstellen. Ein räumlicher Temperaturverlauf kann beispielsweise eine Temperatur entlang zumindest einer Ausdehnungsachse (eindimensional) des Temperatursensors, insbesondere in entlang zweier Achsen (zweidimensional) darstellen.

Wie eingangs bereits erläutert, sind die Temperaturverläufe unterschiedlicher Antriebstypen höchst unterschiedlich.

So ist beispielsweise bei einem Verbrennungsmotor zu Beginn des Parkvorgangs mit einer erhöhten Temperatur im Frontbereich des Fahrzeugs zu rechnen, da dort der Verbrennungsmotor angeordnet ist. Die Temperatur nimmt in der Regel linear oder degressiv ab, abhängig davon ob der Kühler des Motors nachläuft oder nicht. Nach dem Abkühlen bleibt die Temperatur gering. Der Hotspot des Temperaturverlaufs liegt dabei in der Regel im Bereich des Motorblocks oder des Tanks des Fahrzeugs.

Bei einem batteriebetriebenen Fahrzeug mit Brennstoffzelle ist zu Beginn des Parkvorgangs mit einer geringen Temperatur im Bereich der Fahrzeugfront zu rechnen, da sich ein Elektromotor weniger stark aufheizt als ein Verbrennungsmotor. Die Temperatur nimmt in der Regel linear ab. Nach dem Abkühlen bleibt die Temperatur gering. Im Falle eines Brandes und insbesondere auch schon vor der Entstehung eines Brandes wird sich die Batterie jedoch in der Regel aufheizen. Dieser Aufheizvorgang verläuft über einige Minuten, ist insbesondere erheblich länger als bei einem Brand fossiler Brennstoffe. Ist jedoch einmal ein sogenannter "tripping point" erreicht, steigt die Temperatur rasant an und mündet im Brand oder der Explosion der Batterie. Der Hotspot des Temperaturverlaufs liegt dabei in der Regel mittig des Fahrzeugs, da dort in der Regel die Batterie angeordnet ist.

Bei einem wasserstoffbetriebenen Fahrzeug ist zu Beginn des Parkvorgangs mit einer geringen Temperatur im Bereich der Fahrzeugfront zu rechnen, da sich ein Elektromotor weniger stark aufheizt als ein Verbrennungsmotor. Die Temperatur nimmt in der Regel linear ab. Nach dem Abkühlen bleibt die Temperatur gering. Im Falle eines Brandes wird der Temperaturanstieg in der Regel noch schneller sein als bei einem Fahrzeug mit Verbrennungsmotor, da der Wasserstoff unmittelbar reagieren wird und explodiert. Der Hotspot des Temperaturverlaufs liegt dabei in der Regel im Bereich des Tanks des Fahrzeugs.

Die genannten Antriebstypen sind rein beispielhaft. Es gibt z.B. auch gasbetriebene Fahrzeuge sowie Wasserstoff-Fahrzeuge mit Verbrennungsmotor, die ebenfalls typische Temperaturverläufe haben.

Diese und weitere Informationen zum Temperaturverlauf können in der Auswerteeinheit hinterlegt sein, um dem Signal eine Information beizufügen, aus welchem sich eine wahrscheinliche Brandlast ergibt. Das Signal kann beispielsweise eine Information zu einem Antriebstyp des Fahrzeugs an einem jeweiligen Parkplatz enthalten.

Ein Temperatursensor kann exklusiv einem Parkplatz zugeordnet sein. In diesem Fall kann durch die Auswerteeinheit nicht nur der Temperaturverlauf sondern auch der Ort des Temperaturverlaufs, insbesondere der Parkplatz ermittelt werden. Dem Signal kann somit eine Information zu dem Parkplatz selbst, das heißt eine räumliche Information zu dem Parkplatz oder eine Bezeichnung des Parkplatzes, hinzugefügt werden.

Gemäß einem Ausführungsbeispiel wird vorgeschlagen, dass der Temperatursensor eine optische Faserleitung ist. Mit Hilfe einer solchen optischen Faserleitung kann insbesondere kleinbauend am Boden des Parkplatzes eine Temperatursensierung erfolgen. Eine Faserleitung kann eine Längsausdehnung haben und ein Temperaturverlauf kann örtlich aufgelöst entlang der Faserleitung bestimmt werden.

Die Faserleitung ist insbesondere eine Glasfaserleitung, insbesondere ein Glasfaser-Brandmeldekabel. Solche Glasfaser-Brandmeldekabel sind bereits bekannt und werden beispielsweise im Deckenbereich von Tunneln eingesetzt, um über weite Entfernungen Temperatursensierungen durchführen zu können.

Der Temperatursensor kann jedoch auch ein elektrischer Sensor sein, beispielsweise ein auf einem Widerstandsdraht basierender Sensor. Ein solcher Sensor kann für eine räumliche Auflösung in Abschnitte, die einzeln ausgewertet werden können, unterteilt werden. Ein auf einem elektrischen Widerstand, beispielsweise einem NTC-Widerstand basierender Temperatursensor ist ebenfalls denkbar.

Um zu verhindern, dass der Temperatursensor durch überfahrende Fahrzeuge beschädigt wird, wird vorgeschlagen, dass der Temperatursensor in den Boden des Parkplatzes integriert ist. Beim Bau des Parkplatzes kann der Temperatursensor beispielsweise vor dem Aufbringen der obersten Deckschicht eingelassen werden. Für eine nachträgliche Installation ist es beispielsweise möglich, dass die oberste Deckschicht aufgeschlitzt wird, der Temperatursensor eingelegt wird und anschließend der Schlitz versiegelt wird, beispielsweise mit einem Bitumen.

Wie eingangs bereits erläutert, kann in der Auswerteeinheit hinterlegt sein, welcher Temperaturverlauf für welchen Fahrzeugtyp, insbesondere welchen Antriebstyp charakteristisch ist. So können verschiedene charakterisierende Temperaturverläufe für jeweils einen Fahrzeugtyp und/oder für jeweils einen Antriebstyp in der Auswerteeinheit gespeichert sein. So kann in der Auswerteeinheit für jeden Antriebstyp ein Cluster von typischen Temperaturverläufen hinterlegt sein.

Der erfasste Temperaturverlauf wird mit den gespeicherten Temperaturverläufen verglichen. Dabei kann insbesondere über eine Kreuzkorrelation des erfassten Temperaturverlaufs mit dem gespeicherten Temperaturverlauf, sowohl zeitlich als auch räumlich aufgelöst, erfolgen. Ein solches Verfahren ist beispielsweise ein SSD-Verfahren. Es kann festgestellt werden, mit welchen der gespeicherten Temperaturverläufen der erfasste Temperaturverlauf am ähnlichsten ist. Auch kann beispielsweise eine Summe aller Abweichungen des erfassten Temperaturverlaufs mit allen einem Cluster zugehörigen Temperaturverläufen gebildet wird und der absolute Wert der Summe oder ein normierter Wert der Summe für alle Cluster miteinander verglichen wird. Der kleinste Abweichungsbetrag kann genutzt werden um das Cluster zu bestimmen, welches für den erfassten Temperaturverlauf am wahrscheinlichsten ist. Abhängig von dem Vergleich kann die Auswerteinheit einen Antriebstyp des auf dem Parkplatz abgestellten Fahrzeugs bestimmen. In jedem Fall können immer eine sehr hohe Temperatur und damit ein Brand erkannt werden. Auch dann, wenn keine Kenntnis über den Typen des KFZ vorliegt oder aus dem Temperaturverlauf erkannt werden kann. Damit könnte das System auch ohne Auswertung der Spezifika einer Temperaturkurve den Brand einem Ort zuordnen.

Daneben können bei Vorhandensein von Ortssensoren, und der Kenntnis, um welche konkrete Fahrzeugart es sich an dem konkreten Ort handelt, ungewöhnliche Temperaturverläufe schneller als solche erkannt werden. Das System würde also bei einem E-Auto auf eine E-Kurve warten usw.

Um die Detektion eines Brandes zu optimieren, ist es hilfreich, den Antriebstyp zu kennen, bevor ein Brand überhaupt entsteht. Daher wird vorgeschlagen, dass zeitlich zunächst ein erster Temperaturverlauf ausgewertet wird. Abhängig hiervon, beispielsweise wenn ein Fahrzeug auf den Parkplatz fährt und der Parkvorgang beginnt, kann der Antriebstyp des geparkten Fahrzeugs bestimmt werden. Dieser bestimmte Antriebstyp wird für diesen Parkplatz gespeichert, bis das Fahrzeug den Parkplatz verlässt. Dann kann dieser Speicher gelöscht und wiederbeschrieben werden, beispielsweise mit dem Wert des Antriebstyps des nächsten geparkten Fahrzeugs auf diesem Parkplatz.

Während des Parkvorgangs wird dauerhaft oder in Intervallen ein zweiter Temperaturverlauf erfasst und ausgewertet. Bei dieser Auswertung wird der erfasste Temperaturverlauf mit Temperaturverläufen verglichen. Um schneller und sicherer feststellen zu können, ob ein Brand vorliegt oder nicht, wird der Vergleich nur mit den für den bekannten Antriebstyp bekannten Temperaturverläufen durchgeführt. Liegt ein Brand vor, ist der Temperaturverlauf für den Antriebstyp typisch. Ist der Antriebstyp bekannt und wird der zweite Temperaturverlauf mit Temperaturverläufen von entstehenden Bränden für diesen Antriebstypen verglichen, so kann mit hoher Wahrscheinlichkeit auf einen tatsächlichen Brand oder einen drohenden Brand geschlossen werden.

Befährt das Fahrzeug den Parkplatz und beginnt der Parkvorgang, so wird ein für den Antriebstyp des geparkten Fahrzeugs charakteristischer Temperaturverlauf erfasst. Durch diese Erfassung wird auch festgestellt, dass ein entsprechendes Fahrzeug auf dem Parkplatz abgestellt wurde. Daher wird abhängig von der Auswertung eine Belegung des Parkplatzes signalisiert. Entfernt sich das Fahrzeug wieder von dem Parkplatz, kann dies gegebenenfalls auch am Temperaturverlauf erkannt werden und eine entsprechende Belegungsinformation ausgegeben werden.

Gemäß einem Ausführungsbeispiel wird vorgeschlagen, dass die Ausgabe des Signals abhängig von dem bestimmten Antriebstyp ist. So ist es beispielsweise denkbar, dass das Signal ein Brandvoralarm ist, wenn beispielsweise bei einem batteriebetriebenen Fahrzeug eine Temperaturerhöhung oder ein Temperaturgradient nach einer gewissen Mindestdauer nach Beginn des Parkvorgangs detektiert wird. Dies kann auf ein Erwärmen der Batterie hinweisen und signalisieren, dass ein Brand gegebenenfalls bevorsteht. Durch einen solchen Voralarm können bereits Maßnahmen ergriffen werden, um den Brand zu verhindern.

Gemäß einem Ausführungsbeispiel wird vorgeschlagen, dass der Auswerteeinheit eine Mehrzahl von Temperatursensoren zugeordnet ist und die Auswerteeinheit deren Temperaturverläufe auswertet. Insbesondere kann je Parkplatz zumindest ein Temperatursensor exklusiv zugeordnet sein und in der Auswerteeinheit kann hinterlegt werden, welchem Parkplatz welcher Temperatursensor zugeordnet ist. Somit kann nicht nur ein Brand detektiert werden, sondern dieser auch räumlich einem Parkplatz zugeordnet werden.

Gemäß einem Ausführungsbeispiel wird vorgeschlagen, dass die Auswerteeinheit abhängig von der Auswertung eine optische Wegemarkierung ansteuert. In einem Parkhaus oder einer Tiefgarage können optische Wegemarkierungen zu Verkehrsflusssteuerungen vorgesehen sein. Diese werden in der Regel dazu verwendet, Fahrzeuge zu freien Parkplätzen zu leiten. Kommt es jedoch zu einem Brand oder einem Voralarm, beispielsweise wenn sich eine Batterie aufheizt, kann es sinnvoll sein, die Feuerwehr möglichst schnell zu der Brandgefahr oder der Brandstelle zu leiten. Da durch die Auswertung die Position des Brandes, insbesondere der Parkplatz des brennenden Pkws bekannt ist, kann die Auswerteeinheit die Wegemarkierung so ansteuern, dass die Feuerwehr unmittelbar zum Brandherd geleitet wird.

Gemäß einem Ausführungsbeispiel wird vorgeschlagen, dass sobald ein Brand detektiert wurde oder beispielsweise ein Voralarm bei einer aufgeheizten Batterie ausgegeben wurde, der entsprechende Parkplatz für weitere Fahrzeuge gesperrt wird und beispielsweise mittels der optischen Wegemarkierung die Sperrung ausgewiesen wird. Auch kann ein Parkdeck oder ein räumlicher Bereich um diesen Parkplatz herum gesperrt werden und die Wegemarkierung kann so angesteuert werden, dass keine weiteren Fahrzeuge in diesen Bereich geleitet werden.

Ein weiterer Aspekt ist eine Auswerteeinheit nach Anspruch 10.

Im Falle eines Signals, beispielsweise eines Voralarms oder eines Brandmeldesignals, können durch die Auswerteeinheit Sicherungsmaßnahmen eingeleitet werden. So ist es beispielsweise möglich, bei einem Signal den Bereich des Parkplatzes, von dem das Signal ausgelöst wurde, zu sperren, beispielsweise ein entsprechendes Parkdeck zu sperren. Auch kann eine Ventilation oder eine Brandbekämpfungsanlage in diesem Bereich aktiviert werden. Auch ist es möglich, dass gegebenenfalls vorhandene elektrische Installationen, wie beispielsweise elektrische Ladestationen in diesem Bereich automatisch deaktiviert werden. Fluchtwegmarkierungen können aktiviert werden, um die Entfluchtung aus dem Bereich zu vereinfachen. Da sowohl der Antriebstyp als auch die Position des Brandes oder der Brandgefahr durch die gegenständliche Lösung bekannt sind, können Gegenmaßnahmen, wie oben genannt und weitere unmittelbar und automatisch eingeleitet werden.

Nachfolgend wird der Gegenstand anhand einer Ausführungsbeispiele zeigenden Zeichnung näher erläutert. In der Zeichnung zeigen:
- Fig. 1: ein gegenständliches Parkraumbewirtschaftungssystem;
- Fig. 2: ein Temperatursensor im Boden eines Parkplatzes;
- Fig. 3: Wegemarkierungen im einen Parkraum;
- Fig. 4a-c: Temperatur-Zeit Profile;
- Fig. 5a-c: Temperatur-Ort Profile;
- Fig. 6a-c: Temperatur-Zeit Profile bei einem Brand;

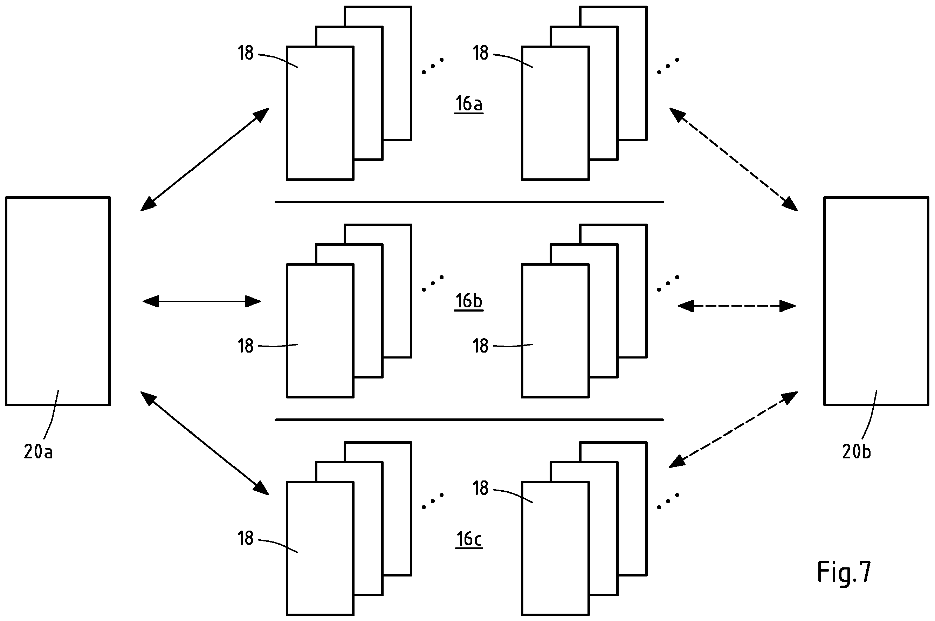

- Fig. 7: die Auswertung von Temperaturverläufen.

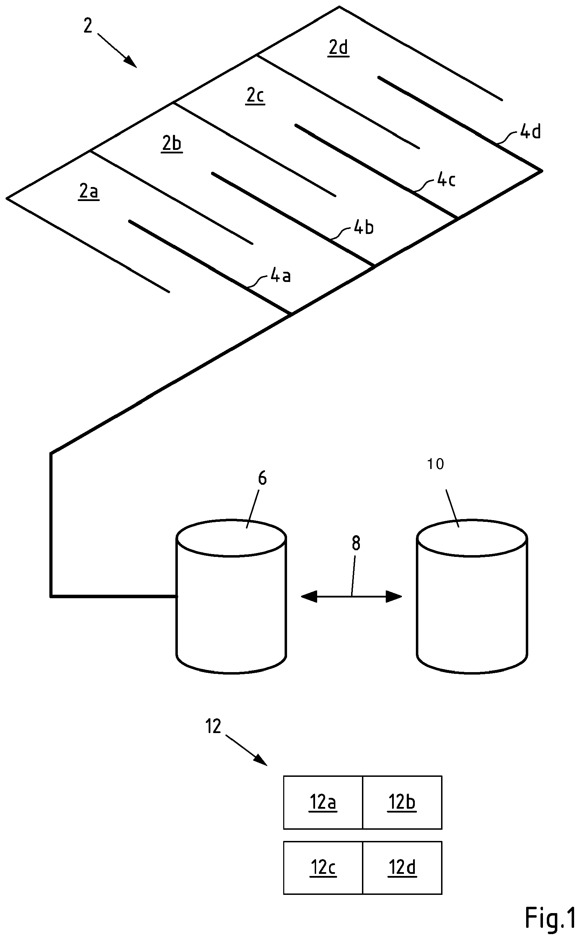

Fig. 1 zeigt einen Parkraum 2 eines Parkraumbewirtschaftungssystems mit einer Mehrzahl an Parkplätzen 2a, b, c und d. Am Boden der Parkplätze 2a-d kann jeweils ein sich in Längsrichtung erstreckender Temperatursensor 4a-d angeordnet sein. Der Temperatursensor 4a-d kann dabei beispielsweise eine Faserleitung, insbesondere eine Brandmelde-Glasfaserleitung sein. Über geeignete Kontrollmittel (nicht gezeigt) lässt sich entlang Temperatursensoren 4a-d sowohl ein zeitlicher Temperaturverlauf als auch ein örtlich aufgelöster Temperaturverlauf erfassen. Die erfassten Temperaturverläufe werden zugeordnet zu einem der Parkplätze 2a-d einer Auswerteschaltung 6 zugeleitet. In der Auswerteschaltung 6 erfolgt ein nachfolgend noch beschriebener Vergleich der erfassten Temperaturverläufe mit gespeicherten Temperaturverläufen, um in einem Signal 8 einer Brandmeldezentrale 10 Informationen zu der Belegung des Parkraums 2 zukommen zu lassen.

Das Signal 8 kann beispielsweise ein erstes Signal 12 sein, in dem eine Information 12a zu einem Parkplatz 2a-d verknüpft mit einer Information 12b zu einem Antriebstyp eines auf dem Parkplatz 2a-d geparkten Fahrzeugs enthalten ist. Ein Signal 12 kann jedoch auch ein Alarmsignal sein, in dem eine Information 12a zu einem Parkplatz und eine Information 12c zu einem detektierten Brand oder einer außergewöhnlichen Temperaturentwicklung an einem der Parkplätze 2a-d zusammen beispielsweise auch mit einem Antriebstyp enthalten ist. Das Signal 8 wird von der Auswerteeinheit 6 an eine Brandmeldezentrale 10 übermittelt.

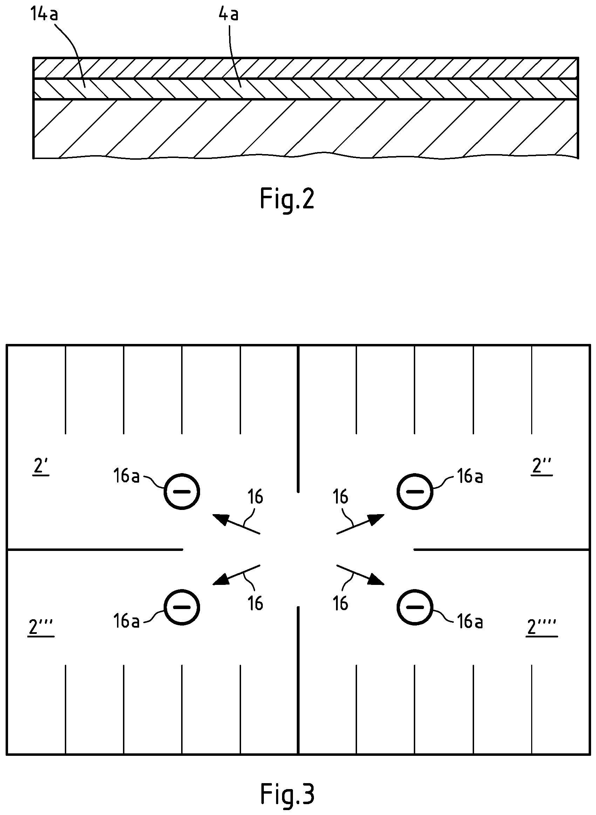

Ein als Faserleiter gebildeter Temperatursensor 4a kann beispielsweise in einer Deckschicht 14a eingelassen sein, wie in Fig. 2 gezeigt. Dadurch wird verhindert, dass der Temperatursensor 4a durch überfahrende Fahrzeuge beschädigt wird.

Die Parkplätze 2a-d des Parkraums 2 können wie in der Fig. 3 dargestellt, in verschiedenen Parkdecks 2', 2", 2‴ und 2"" nebeneinander und/oder übereinander angeordnet sein. Zu den verschiedenen Parkdecks 2'-2"" können Wegemarkierungen 16 weisen. Die Wegemarkierungen 16 können auch Informationsschilder 16a enthalten. Die Wegemarkierungen 16 sowie die Schilder 16a können durch die Auswerteeinheit 6 und/oder die Brandmeldezentrale 10 angesteuert werden, um beispielsweise im Brandfall eine Feuerwehr an den betroffenen Parkplatz 2a-d zu leiten oder eine Zufahrt zu einem Parkdeck 2'-2"" über ein Schild 16a für weitere Fahrzeuge zu verhindern.

Wie bereits erläutert, ist ein zeitlicher Temperaturverlauf eines abgestellten Fahrzeugs charakteristisch für die Antriebsart des Fahrzeugs.

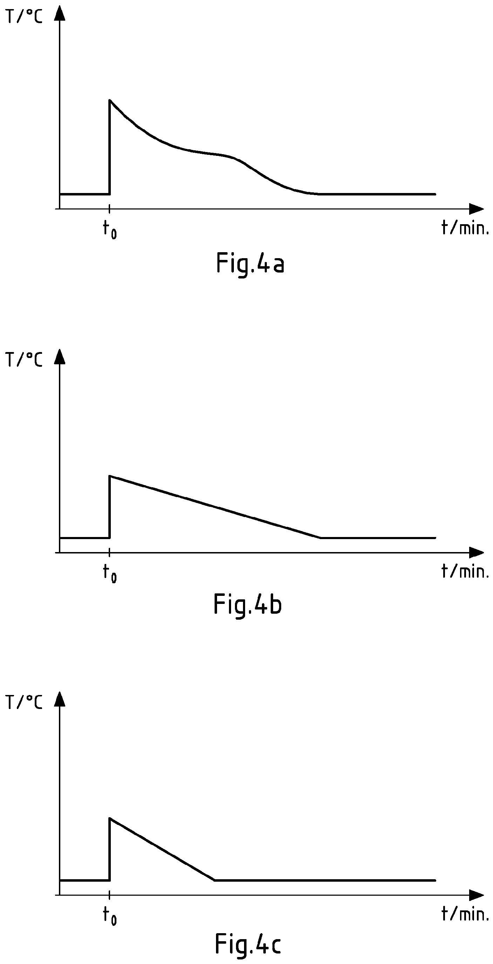

Fig. 4a zeigt beispielhaft einen Temperaturverlauf über die Zeit eines Fahrzeugs mit einem Verbrennungsmotor. Zum Zeitpunkt t0 wird das Fahrzeug abgestellt und die Temperatur steigt schnell an, da der Verbrennungsmotor heiß ist. Die Temperaturabnahme ist degressiv, da zunächst der Motorlüfter nachläuft und anschließend die Kühlung durch reine Konvektion erfolgt.

Fig. 4b zeigt beispielhaft einen Temperaturverlauf eines batterieelektrischen Fahrzeugs. Zum Zeitpunkt t0 wird das Fahrzeug abgestellt und das Fahrzeug ist leicht erwärmt, beispielsweise im Bereich der Batterie aufgrund der hohen Stromflüsse. Die Abkühlung ist in der Regel linear und langsamer als bei einem Verbrennungsmotor, wie an dem Temperaturverlauf zu erkennen ist.

Fig. 4c zeigt beispielhaft einen Temperaturverlauf eines Brennstoffzellenfahrzeugs. Hier ist die anfängliche Temperatur zum Zeitpunkt t0, wenn das Fahrzeug abgestellt wird, in etwa gleich derjenigen des batterieelektrischen Fahrzeugs gemäß Fig. 4b, die Abkühlung erfolgt jedoch schneller, da die Wärmekapazität der Batterie nicht vorhanden ist und somit weniger Wärmeenergie gespeichert ist.

Anhand dieser drei beispielhaften Temperaturverläufe ist zu erkennen, dass die Auswerteeinheit 6 zu Beginn eines Parkvorgangs einen Antriebstyp eines Fahrzeugs bestimmen kann.

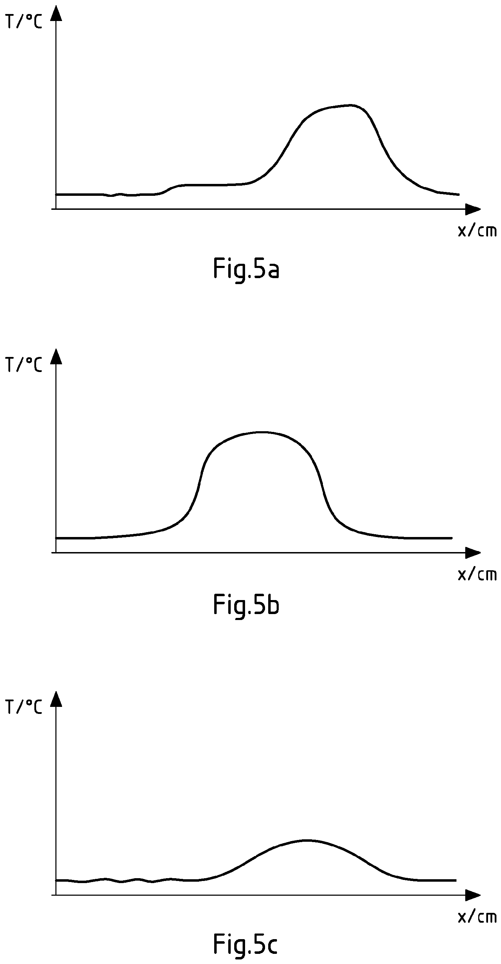

Fig. 5a zeigt ein beispielhaften Temperaturverlauf über die Längserstreckungsrichtung eines Temperatursensors 4a-d eines Verbrennungsmotors. Zu erkennen ist, dass beispielsweise in einem Frontbereich, dort wo der Verbrennungsmotor ist eine erhöhte Temperatur ist, der Unterboden jedoch relativ kühl und im Heckbereich die Temperatur nahezu gleich der Umgebungstemperatur ist.

Dies ist anders bei einem batterieelektrischen Fahrzeug, dessen räumlicher Temperaturverlauf beispielhaft in Fig. 5b dargestellt ist. Dort wird in der Regel der Unterboden, an dem die Batterie angeordnet ist, heißer sein als Front und Heck des Fahrzeugs.

Fig. 5c zeigt einen beispielhaften räumlichen Temperaturverlauf eines Brennstoffzellenfahrzeugs. Dort ist aufgrund der fehlenden Batterie im Bereich der Front des Fahrzeugs eine erhöhte Temperatur zu erwarten, der Unterboden und das Heck wird jedoch keine erhöhte Temperatur haben.

Auch anhand des räumlichen Temperaturverlaufs gemäß der Fig. 5a-c kann ein Antriebstyp bestimmt werden.

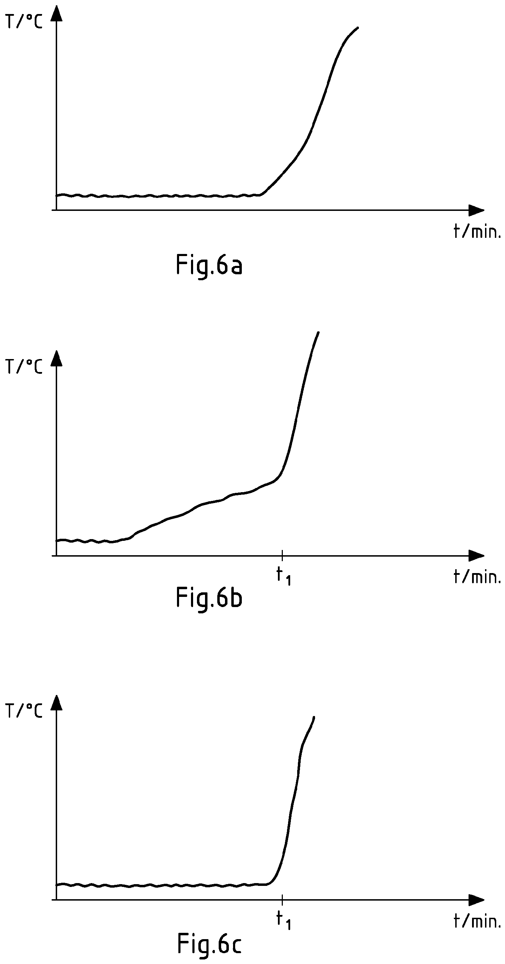

Die Fig. 6a-c zeigen beispielhafte Temperaturverläufe der verschiedenen Antriebstypen im Falle eines Brandes.

Die Fig. 6a zeigt, dass im Falle eines Brandes eines Verbrennungsmotors die Temperatur linear und rapide ansteigt.

Bei der Fig. 6b, bei der ein Brand eines batterieelektrischen Fahrzeugs dargestellt ist, ist zu erkennen, dass vor einem starken Anstieg der Temperatur, die Temperatur zunächst leicht ansteigt, was beispielsweise durch Kurzschlüsse innerhalb der Batteriemodule bedingt ist. Zum Zeitpunkt t1 kann die innere Temperatur der Batterie so groß sein, dass ein "tripping point" erreicht ist und die Batterie anfängt zu brennen, woraufhin dann ein steiler Temperaturanstieg zu erwarten ist.

Fig. 6c zeigt einen beispielhaften Temperaturverlauf bei Brand eines Brennstoffzellenfahrzeugs. Bis zum Zeitpunkt t1, zudem der Brand auftritt, ist keinerlei Temperaturerhöhung zu messen. Sobald der Brand eintritt ist mit einem sehr steilen Temperaturanstieg, gegebenenfalls steiler als beim Verbrennungsmotor gemäß Fig. 6a zu rechnen.

Die gezeigten Temperaturprofile sind rein beispielhaft und sollen lediglich verdeutlichen, dass sowohl eine zeitliche als auch eine räumliche Temperaturverteilung Aufschluss über einerseits einen Antriebstyp und andererseits über die Gefahr oder das Vorhandensein eines Brandes geben kann.

In der Auswerteeinheit 6 sind verschiedene Cluster 16a-c vorgesehen. In jedem Cluster 16a-c sind für einen spezifischen Antriebstyp verschiedene Temperaturprofile 18 hinterlegt. Ein erstes Temperaturprofil 18 kann beispielsweise einen zeitlichen Temperaturverlauf zu Beginn eines Parkvorgangs darstellen. Ein weiteres Temperaturprofil 18 kann einen räumlichen Temperaturverlauf zu Beginn eines Parkvorgangs darstellen. Ein weiteres Temperaturprofil 18 kann einen zeitlichen Verlauf eines Temperaturprofils bei einem Brand darstellen und schließlich kann ein weiteres Temperaturprofil 18 einen räumlichen Temperaturverlauf bei einem Brand darstellen. Für jeden dieser Temperaturverläufe kann ein Satz charakteristischer Temperaturprofile 18 hinterlegt sein, sodass für jeden Antriebstyp für jeden Fall ein oder mehrere Temperaturprofile 18 hinterlegt sind.

Wird nun ein zeitliches Temperaturprofil 20a durch die Auswerteeinheit 6 erfasst, wird dieses mit den zeitlichen Temperaturprofilen 18 der verschiedenen Cluster 16a-c verglichen. Hierbei kann beispielsweise eine Kreuzkorrelation durchgeführt werden und dasjenige Temperaturprofil 18 ermittelt werden, welches die geringste Abweichung gegenüber dem gemessenen Temperaturprofil 20a hat. Daraus kann beispielsweise auf den Antriebstyp geschlossen werden.

Wird später, beispielsweise zeitlich später, ein zweites Temperaturprofil 20b gemessen, kann dies beispielsweise mit Temperaturprofilen 18 der Cluster 16a-c verglichen werden, welche auf einen Brand hinweisen. Ist der Antriebstyp vorbekannt, so kann ein Vergleich nur mit den Temperaturprofilen 18 des Clusters 16a-c durchgeführt werden, welches diesem Antriebstyp zugeordnet ist. Ist die Abweichung des gemessenen Temperaturprofils 20b zu den hinterlegten Temperaturprofilen 18 unter einem Schwellwert, so kann beispielsweise ein Warnsignal, ein Brandsignal oder dergleichen, beispielsweise ein Signal 12 mit den Informationen 12a-c ausgegeben werden.

## Patentansprüche

1. Parkraumbewirtschaftungssystem umfassend,
- einen am Boden eines Parkplatzes (2a) angeordneten Temperatursensor (4a),
- eine mit dem Temperatursensor (4a) verbundene Auswerteeinheit (6), wobei
- die Auswerteeinheit (6) dazu ausgelegt ist, mit Hilfe des Temperatursensors (4a) zumindest einen Temperaturverlauf (18) im Bereich des Temperatursensors (4a) auszuwerten und abhängig von dem Temperaturverlauf (18) ein Signal (19) auszugeben,
**dadurch gekennzeichnet,**
- **dass** die Auswerteeinheit (6) weiter dazu ausgelegt ist, einen erfassten Temperaturverlauf (18) mit gespeicherten Temperaturverläufen (18) zu vergleichen und abhängig von dem Vergleich einen Antriebstyp eines auf dem Parkplatz abgestellten Fahrzeugs zu bestimmen.

2. Parkraumbewirtschaftungssystem nach Anspruch 1,
**dadurch gekennzeichnet,**
- **dass** der Temperatursensor (4a) eine optische Faserleitung, insbesondere eine Glasfaserleitung ist, insbesondere dass die Faserleitung ein Glasfaser-Brandmeldekabel ist, oder das der Temperatursensor (4a) ein elektrischer Sensor ist.

3. Parkraumbewirtschaftungssystem nach Anspruch 1 oder 2,
**dadurch gekennzeichnet,**
- **dass** der Temperatursensor (4a) in den Boden des Parkplatzes (2a) integrierbar ist.

4. Parkraumbewirtschaftungssystem nach einem der vorangehenden Ansprüche,
**dadurch gekennzeichnet,**
- **dass** die Auswerteeinheit (6) dazu ausgelegt ist, einen zeitlich ersten Temperaturverlauf (18) auszuwerten und anhand der Auswertung einen Antriebstyp zu bestimmen und anschließend einen zeitlich zweiten Temperaturverlauf (18) abhängig von dem bestimmten Antriebstyp auszuwerten, um das Brandmeldesignal (19) auszugeben.

5. Parkraumbewirtschaftungssystem nach einem der vorangehenden Ansprüche,
**dadurch gekennzeichnet,**
- **dass** die Auswerteeinheit (6) dazu ausgelegt ist, abhängig von der Auswertung eine Belegung des Parkplatzes (2a) zu signalisieren.

6. Parkraumbewirtschaftungssystem nach einem der vorangehenden Ansprüche,
**dadurch gekennzeichnet,**
- **dass** die Ausgabe des Signals abhängig von dem bestimmten Antriebstyp ist.

7. Parkraumbewirtschaftungssystem nach einem der vorangehenden Ansprüche,
**dadurch gekennzeichnet,**
- **dass** die Auswerteeinheit dazu ausgelegt ist, einer Mehrzahl von Temperatursensor (4a, b, c) auszuwerten.

8. Parkraumbewirtschaftungssystem nach einem der vorangehenden Ansprüche,
**dadurch gekennzeichnet,**
- **dass** die Auswerteeinheit dazu ausgelegt ist, abhängig von der Auswertung eine optische Wegemarkierung (16) anzusteuern, insbesondere dass die Auswerteeinheit (6) dazu ausgelegt ist, abhängig von der Auswertung ein zu dem Parkplatz (2a), für den das Signal (19) ausgegeben wurde, führende optische Wegemarkierung (16) anzusteuern.

9. Parkraumbewirtschaftungssystem nach einem der vorangehenden Ansprüche,
**dadurch gekennzeichnet,**
- **dass** die Auswerteeinheit dazu ausgelegt ist, abhängig von der Auswertung den Parkplatz (2a), für den das Signal (19) ausgegeben wurde, mit Hilfe einer optischen Wegemarkierung (16) zu sperren.

10. Auswerteeinheit für ein Parkraumbewirtschaftungssystem umfassend,
- zumindest einen Eingang, eingerichtet zur Kopplung mit einem am Boden eines Parkplatzes (2a) angeordneten Temperatursensor (4a), wobei
- die Auswerteeinheit (6) dazu ausgelegt ist, mit Hilfe des Temperatursensors (4a) zumindest einen Temperaturverlauf (18) an dem Parkplatz (2a) auszuwerten und abhängig von dem Temperaturverlauf ein Signal (19) auszugeben,
**dadurch gekennzeichnet,**
- **dass** die Auswerteeinheit (6) weiter dazu ausgelegt ist, einen erfassten Temperaturverlauf (18) mit gespeicherten Temperaturverläufen (18) zu vergleichen und abhängig von dem Vergleich einen Antriebstyp eines auf dem Parkplatz (2a) abgestellten Fahrzeugs zu bestimmen.

## Claims

1. Parking space management system comprising,
- a temperature sensor (4a) attachable to the floor of a parking lot (2a),
- an evaluation unit (6) connected to the temperature sensor (4a), wherein
- the evaluation unit (6) is arranged to evaluate at least one temperature profile (18) in the region of the temperature sensor (4a) with the temperature sensor (4a) and to output a signal (19) depending on the temperature profile (18),
**characterized in**
- **that** the evaluation unit (6) is further arranged to compare a detected temperature profile (18) with stored temperature profiles (18) and, depending on the comparison, to determine a drive type of a vehicle parked in the parking lot (2a).

2. Parking space management system according to claim 1,
**characterized in**
- **that** the temperature sensor (4a) is an fiber line, in particular a fiber optic line, in particular that the fiber line is a fiber optic fire alarm cable, or that the temperature sensor (4a) is an electrical sensor.

3. Parking space management system according to claim 1 or 2,
**characterized in**
- **that** the temperature sensor (4a) integrateable into the floor of the parking lot (2a).

4. Parking space management system according to one of the preceding claims,
**characterized in**
- **that** the evaluation unit (6) is arranged to evaluate a temporally first temperature profile (18) and to determine a drive type on the basis of the evaluation and then to evaluate a temporally second temperature profile (18) depending on the determined drive type in order to output the fire alarm signal (19).

5. Parking space management system according to one of the preceding claims,
**characterized in**
- **that** the evaluation unit (6) is arranged to signal an occupancy of the parking lot (2a) depending on the evaluation.

6. Parking space management system according to one of the preceding claims,
**characterized in**
- **that** the output of the signal is dependent on the determined drive type.

7. Parking space management system according to one of the preceding claims,
**characterized in**
- **that** the evaluation unit is arranged to evaluate a plurality of temperature sensors (4a, b, c).

8. Parking space management system according to one of the preceding claims,
**characterized in**
- **that** the evaluation unit is arranged to control an optical path marking (16) depending on the evaluation, in particular that the evaluation unit (6) is arranged to, depending the evaluation, control an optical path marking (16) leading to the parking lot (2a) for which the signal (19) was output.

9. Parking space management system according to one of the preceding claims,
**characterized in**
- **that** the evaluation unit is arranged to, depending on the evaluation, block the parking lot (2a) for which the signal (19) was output by means of an optical path marking (16).

10. Evaluation unit for a parking space management system comprising,
- at least one input, arranged for coupling with a temperature sensor (4a) arranged at the floor of a parking lot (2a), wherein
- the evaluation unit (6) is arranged to evaluate at least one temperature profile (18) at the parking lot (2a) with the temperature sensor (4a) and to output a signal (19) depending on the temperature profile,
**characterized in**
- **that** the evaluation unit (6) is further arranged to compare a detected temperature profile (18) with stored temperature profiles (18) and, depending on the comparison, to determine a drive type of a vehicle parked in the parking lot (2a).

## Revendications

1. Système de gestion de parking comprenant,
- un capteur de température (4a) disposé sur le sol d'une place de parking (2a),
- une unité d'évaluation (6) connecté au capteur de température (4a),
où
- l'unité d'évaluation (6) est configuré pour évaluer, à l'aide du capteur de température (4a), au moins un profil de température (18) dans la zone du capteur de température (4a) et sortir un signal (19) en fonction du profil de température (18).
**caractérisé en ce**
- **que** l'unité d'évaluation (6) est en outre configuré pour comparer un profil de température (18) détectée à des profils de température (18) mémorisées et déterminer, en fonction de la comparaison, un type d'entraînement d'un véhicule garé sur la place de parking.

2. Système de gestion de parking selon la revendication 1,
**caractérisé en ce**
- **que** le capteur de température (4a) est une ligne à fibre optique, en particulier une ligne à fibre de verre optique, en particulier que la ligne à fibre optique est un câble de détection d'incendie à fibre de verre optique, ou que le capteur de température (4a) est un capteur électrique.

3. Système de gestion de parking selon la revendication 1 ou 2,
**caractérisé en ce**
- **que** le capteur de température (4a) est intégrable dans le sol du parking (2a).

4. Système de gestion de parking selon l'une des revendications précédentes,
**caractérisé en ce que**
- que l'unité d'évaluation (6) est configuré pour évaluer un temporellement premier profil de température (18) et déterminer un type d'entraînement à l'aide de l'évaluation, puis évalue une temporellement deuxième profil de température (18) en fonction du type d'entraînement déterminé, afin de sortir le signal de détection d'incendie (19).

5. Système de gestion de parking selon l'une des revendications précédentes,
**caractérisé en ce**
- **que** l'unité d'évaluation (6) est configuré pour signaler une occupation de la place de parking (2a) en fonction de l'évaluation.

6. Système de gestion de parking selon l'une des revendications précédentes,
**caractérisé en ce**
- **que** la sortie du signal dépend du type d'entraînement déterminé.

7. Système de gestion de parking selon l'une des revendications précédentes,
**caractérisé en ce**
- **que** l'unité d'évaluation est configuré pour évaluer une pluralité de capteurs de température (4a, b, c).

8. Système de gestion de parking selon l'une des revendications précédentes,
**caractérisé en ce**
- **que** l'unité d'évaluation est configuré pour commander un marquage optique d'itinéraire (16) en fonction de l'évaluation, en particulier que l'unité d'évaluation (6) est configuré pour commander un marquage optique d'itinéraire (16) menant à la place de parking (2a) pour laquelle le signal (19) a été sorti en fonction de l'évaluation.

9. Système de gestion de parking selon l'une des revendications précédentes,
**caractérisé en ce**
- **que** l'unité d'évaluation est configuré pour bloquer, en fonction de l'évaluation, la place de parking (2a) pour laquelle le signal (19) a été sorti, à l'aide d'un marquage optique d'itinéraire (16).

10. Unité d'évaluation pour un système de gestion de parking comprenant,
- au moins une entrée, configuré pour un couplage à un capteur de température (4a) disposé sur le sol d'une place de parking (2a),
où
- l'unité d'évaluation (6) est configuré pour évaluer à l'aide du capteur de température (4a) au moins un profil de température (18) sur la place de parking (2a) et sortir un signal (19) en fonction du profil de température,
**caractérisé en ce**
- **que** l'unité d'évaluation (6) est en outre configuré pour comparer un profil de température (18) détectée à des profils de température (18) mémorisées et détermine, en fonction de la comparaison, un type d'entraînement d'un véhicule garé sur la place de parking (2a).
